Europäisches Patentamt

European Patent Office

Office européen des brevets

(11) Veröffentlichungsnummer: **0 291 828 B1**

(19)

# (12) EUROPÄISCHE PATENTSCHRIFT

(45) Veröffentlichungstag der Patentschrift: **19.08.92**

(51) Int. Cl.⁵: **B23Q 3/155**

(21) Anmeldenummer: **88107541.0**

(22) Anmeldetag: **11.05.88**

(54) Greifer für Werkzeuge einer Werkzeugmaschine.

(30) Priorität: **22.05.87 DE 3717201**

(43) Veröffentlichungstag der Anmeldung:
**23.11.88 Patentblatt 88/47**

(45) Bekanntmachung des Hinweises auf die
Patenterteilung:
**19.08.92 Patentblatt 92/34**

(84) Benannte Vertragsstaaten:
**CH DE ES FR GB IT LI SE**

(56) Entgegenhaltungen:
EP-A- 0 190 673          DD-A- 137 676
DD-A- 237 809          DE-A- 2 410 444
DE-A- 2 525 212          DE-A- 2 536 671
DE-A- 2 812 200          DE-A- 3 016 026
FR-A- 2 382 309

PATENT ABSTRACTS OF JAPAN, Band 6, Nr.
4 (M-106)[882], 12. Januar 1982; & JP-A-56 126
549 (OSAKA KIKOU K.K.) 03-10-1981

(73) Patentinhaber: **Chiron-Werke GmbH & Co. KG**
**Talstrasse 33**
**W-7200 Tuttlingen(DE)**

(72) Erfinder: **Winkler, Hans-Henning, Dr.-Ing.**
**Brunnentalstrasse 88**
**W-7200 Tuttlingen(DE)**
Erfinder: **Rütschle, Eugen**
**Schönenbergstrasse 20**
**W-7202 Mühlheim(DE)**

(74) Vertreter: **Witte, Alexander, Dr.-Ing.**
**Witte, Weller & Gahlert Patent- und Rechts-**
**anwälte Augustenstrasse 7**
**W-7000 Stuttgart 1(DE)**

## Beschreibung

Die Erfindung betrifft einen Werkzeugwechsler für Werkzeuge einer Werkzeugmaschine mit einem Greifer, an dem zwei bewegliche Backen zum formschlüssigen Ergreifen der Werkzeuge angeordnet sind, wobei der Greifer einen mittels eines raumfesten Anschlages der Werkzeugmaschine axial verschiebbaren, gegen die Kraft einer Feder arbeitenden Bolzen aufweist, der die Backen um eine Achse in eine Spreizstellung zum Einführen des Werkzeuges bzw. in eine Schließstellung zum formschlüssigen Ergreifen des Werkzeuges verschwenkt, wobei ferner die Backen mit mindestens eine Nocke zum Verschwenken versehen sind und der Bolzen mittels mindestens einer zur Bolzenachse geneigt verlaufenden axialen Führungsschräge in zwei unterschiedlichen axialen Stellungen mit unterschiedlicher radialer Ausladung an der Nocke anliegt.

Ein Werkzeugwechsler der vorstehend genannten Art ist aus dem Dokument DE-A-30 16 026 bekannt.

Bei modernen Werkzeugmaschinen, insbesondere bei sogenannten Bearbeitungszentren, in denen an einer Vielzahl von Werkstücken nacheinander programmgesteuert eine Vielzahl von Bearbeitungsschritten ausgeführt wird, ist es bekannt, Werkzeuge in einem Magazin in der Nähe des Spindelstockes bereit zu halten und bei Wechsel von einem Bearbeitungsschritt zum nächsten das zuvor benutzte Werkzeug mittels eines Greifers auszuwechseln und ein neues Werkzeug für den nächsten Bearbeitungsschritt aus dem Magazin in die Spindel einzuwechseln. Hierzu ist es bekannt, Werkzeugwechsler zu verwenden, die einen beweglichen Arm und einen am freien Ende des Armes angeordneten Greifer aufweisen. Durch entsprechendes Verfahren des Werkzeugwechslers kann nun ein Werkzeug zwischen dem Magazin und der Spindel hin- und hertransportiert werden.

Bei einer ersten Art von Werkzeugmaschinen, wie sie beispielsweise aus dem Dokument DE-A-34 10 656 bekannt sind, befinden sich die Werkzeuge in einem mittels geeigneter Transportmittel versehenen Magazin, und es sind an der Spindel nur zwei Werkzeugwechsler vorgesehen, die gegenläufig ein benutztes Werkzeug aus der Spindel entnehmen bzw. das nächste Werkzeug aus dem Magazin entnehmen und in die Spindel einsetzen. Hierzu muß das Magazin mittels der genannten Transportmittel so betätigt werden, daß für das auszuwechselnde Werkzeug jeweils ein Freiplatz an einer raumfesten Übergabestation bereitgehalten wird, während andererseits an einer ebenfalls raumfesten Übernahmestation das nächste einzusetzende Werkzeug bereitgehalten werden muß, damit der Werkzeugwechsler es dort abholen kann.

Wesentlich ist bei dieser Art von Werkzeugmaschinen, daß jeder Werkzeugwechsler jeweils sämtliche Werkzeuge nacheinander handhabt, die im gesamten Bearbeitungszyklus des Werkstückes benötigt werden. Aus diesem Grunde sind bei den Werkzeugwechslern dieser bekannten Werkzeugmaschinen die Greifer mit einer U-förmigen Aufnahme versehen, damit die Werkzeuge durch radiales Einfahren (bezogen auf die Werkzeugachse) in das Magazin ergriffen und entnommen werden können, um in dieser Stellung dann auch der Spindel zugeführt zu werden. Die Werkzeuge sind dabei in dem Greifer nicht drehfest arretiert, so daß der Greifer am Werkzeug auch während der Bearbeitung des Werkstückes verbleiben kann, um die Werkzeugwechselzeiten zu minimieren.

Es hat sich jedoch gezeigt, daß insbesondere bei sehr kurzen Werkzeugwechselzeiten und damit sehr schnellen Bewegungsvorgängen des Werkzeugwechslers eine Verlagerung des Werkstückes in dem Greifer des Werkzeugwechslers durch Bewegungskräfte auftreten kann. Dies ist dann besonders nachteilig, wenn das Werkzeug in einer bestimmten Umfangsstellung in die Spindel eingeführt werden soll, beispielsweise dann, wenn ein Nutenstein der Spindel in eine zugehörige Nut auf dem Umfang des Werkzeuges eingreifen soll.

Bei einer anderen Gruppe von Werkzeugmaschinen, wie sie beispielsweise in dem Dokument DE-A-32 33 934 beschrieben ist, ist um die Spindel herum eine Vielzahl von Werkzeugwechslern angeordnet, wobei jeweils ein Werkzeugwechsler fest einem Werkzeug zugeordnet ist. Beim Werkzeugwechsel entnimmt der am alten Werkzeug verbliebene Werkzeugwechsler das alte Werkzeug aus der Spindel, während gegenläufig der dem neuen Werkzeug zugeordnete Werkzeugwechsler das neue Werkzeug in die Spindel einsetzt. Im Gegensatz zu der zuvor beschriebenen Art von Werkzeugmaschinen verbleibt daher bei dieser Art von Werkzeugmaschinen ein- und derselbe Werkzeugwechsler während des gesamten Bearbeitungszyklus an ein- und demselben Werkzeug.

Während also bei der zuerst beschriebenen Art von Werkzeugmaschinen der Benutzer vor Beginn des Bearbeitungszyklus zunächst das Magazin mit der benötigten Zahl und Art von Werkzeugen füllt und dann während des Bearbeitungszyklus die Werkzeugwechsler die benötigten Werkzeuge aus dem Magazin entnehmen, erfolgt die Bestückung bei der zweiten geschilderten Art von Werkzeugmaschinen in der Weise, daß der Benutzer die Werkzeuge in die Greifer der vorgesehenen Vielzahl von Werkzeugwechslern einsetzt.

Aus dem Dokument DE-A-33 20 874 ist es für die zweite geschilderte Art von Werkzeugmaschinen bekannt, die Greifer der Werkzeugwechsler mit einer formschlüssigen Arretierung für die Werkzeuge zu versehen, indem eine bewegliche Backe während des Magazinierens der Werkzeugmaschine durch manuelles Betätigen eines Druckknopfes geöffnet und nach dem Einsetzen des Werkzeuges wieder verschlossen wird. Die Werkzeuge sind daher in den Greifern der Werkzeugwechsler sicher gehalten und können auch bei schnellen Bewegungsvorgängen der Werkzeugwechsler bei den heutzutage gewünschten kurzen Werkzeugwechselzeiten keine unzulässigen Lageänderungen ausführen. Sie sind auch weiterhin in dem Greifer des Werkzeugwechslers drehbar gehalten, so daß der Greifer auch während der Bearbeitung des Werkstückes am Werkzeug verbleiben kann. Dieses Konzept der formschlüssigen Arretierung der Werkzeuge ist jedoch nur bei dieser Art von Werkzeugmaschinen möglich, weil - wie erwähnt - der Greifer des Werkzeugwechslers mit seiner formschlüssigen Arretierung während des gesamten Bearbeitungszyklus bestimmungsgemäß am Werkzeug verbleibt.

Aus dem eingangs genannten Dokument DE-A-30 16 026 ist ein weiterer Werkzeugwechsler bekannt, wie er für die eingangs zunächst geschilderte Art von Werkzeugmaschinen als Transfereinheit Verwendung findet. Dieser bekannte Werkzeugwechsler überführt nämlich z.B. für das Einwechseln eines neuen Werkzeuges dieses Werkzeug aus einer Übergabeposition des Werkzeugmagazins zu einer Speicher-Zwischenstation, aus der das Werkzeug dann mittels eines zweiten Werkzeugwechslers abgeholt und in die Spindel überführt wird.

Dieser bekannte Werkzeugwechsler weist einen Greifer auf, bei dem zwei Backenteile an ihrem vorderen Ende eine kreissegmentförmige Aufnahme für einen Werkzeughalter bilden, während ihre rückwärtigen Teile einander in einer Ebene senkrecht zur Werkzeugachse überlappen. Im vorderen Abschnitt der Backenteile sind Zugfedern angeordnet, um die Backenteile in eine geöffnete Position zu drücken. Im hinteren Abschnitt der Backenteile sind diese jeweils mit Stufenbohrungen versehen, in denen Stifte mit Abschnitten unterschiedlichen Durchmessers laufen. In einer axialen Verschiebestellung der Stifte greift einer der Stifte mit einem dickeren Abschnitt formschlüssig in eine zugehörige Ausnehmung des anderen Backenteils, so daß die beiden Stufenbohrungen koaxial liegen. Hierdurch wird eine Schließbewegung der Backen gegen die Kraft der Zugfedern erreicht. In einer anderen axialen Stellung der Stifte geht dieser Formschluß jedoch verloren, weil sich nunmehr ein Stiftabschnitt kleineren Durchmessers in der Ausnehmung befindet und die Backenteile können derart gegeneinander verschwenkt werden, daß die Stufenbohrungen am hinteren Abschnitt nicht mehr miteinander fluchten und die Backen am vorderen Abschnitt sich öffnen.

Die Stifte werden bei dem bekannten Werkzeugwechsler durch Anfahren an einen raumfesten Anschlag betätigt.

Aus dem Dokument DE-A-28 12 200 ist ein weiterer Werkzeugwechsler bekannt, bei dem ein Werkzeughalter in einem Greifer mittels einer kreisbogenförmigen Aufnahme von etwas weniger als 180° Umfangswinkel gehalten wird. Ein zusätzliches Halteelement befindet sich in Fortsetzung der kreisbogenförmigen Aufnahme, um einen Umfangswinkel von mehr als 180° herzustellen und ist in etwa tangentialer Richtung mittels einer Stange verschiebbar.

Bei einem weiteren Werkzeugwechsler, wie er aus dem Dokument DE-A-24 10 444 bekannt ist, weist der Greifer eine erste, starre sowie eine zweite, mittels einer komplizierten Mechanik verschwenkbaren Backe auf. Die Anordnung ist dabei so getroffen, daß sich die bewegliche Backe selbsttätig öffnet und schließt, wenn sie an einem zu ergreifenden Werkzeug zur Anlage kommt bzw. von diesem abgezogen wird.

Aus dem Dokument DD-A-237 809 ist weiterhin noch ein weiterer Werkzeugwechsler bekannt, bei dem zwei federbelastete Backen eines Greifers über ein Schrittschaltwerk abwechselnd in eine geöffnete und eine geschlossene Stellung verschwenkt werden können.

Beide Stellungen sind durch geeignete Rasten mechanisch stabil. Zur Betätigung der Backen dient ein seitlich vom Greifer vorstehender Schieber, der mittels greiferexterner Antriebselemente betätigt wird. Bei diesem bekannten Greifer muß der Schieber jeweils zweimal betätigt werden, nämlich einmal, um die Backen zum Erfassen des Werkzeuges zu öffnen und anschließend zum Festhalten des Werkzeuges wieder zu schließen.

Aus dem Dokument EP-A-0 190 673 ist eine Werkzeugmaschine für die spanabhebende Bearbeitung von Werkstücken mit verschiedenen Werkzeugen bekannt. Bei einem Ausführungsbeispiel dieser bekannten Werkzeugmaschine ist ein Greifer mit zwei um eine Achse verschwenkbaren Backen vorgesehen. Die Backen werden mittels eines federbelasteten Kniehebelgestänges betätigt, wobei die Betätigung über einen Führungsbolzen erfolgt. Hierzu gelangt der Führungsbolzen in Anlage an einen Anschlagring, der am Spindelgehäuse befestigt ist.

Aus dem Dokument DD-A-137 676 ist ein Greifer für die Werkzeugwechseleinrichtung einer Werkzeugmaschine bekannt. Dieser bekannte Greifer ist mit schwenkbeweglichen Greiferbacken ausgestattet, die ihrerseits mit einem verschieb- und feststellbaren Antrieb verbunden sind. Der Antrieb weist einen im Greiferarm längsbeweglichen Greiferschieber auf, der über Mitnehmer mit den Greiferbacken verbunden ist und an dem ein Anschlag sowie ein Verriegelungsteil befestigt sind, von denen der Anschlag mit einem in seiner radialen Bewegungsbahn angeordneten Anschlag und das Verriegelungsteil mit einem die Bewegungsbahn des Greiferschiebers kreuzenden Verriegelungsschieber zeitweise in Wirkverbindung stehen.

Aus dem Dokument FR-A-2 382 309 ist ein weiterer Werkzeugwechsler bekannt, bei dem ein Doppelarmgreifer vorgesehen ist. Hierunter versteht man ein um eine zentrische Achse drehbares Gebilde, an dessen beiden freien Enden jeweils zueinander symmetrische Greifer angeordnet sind. Durch Verschwenken des Gebildes um die Achse kann einmal der eine Greifer und zum anderen der andere Greifer in Flucht mit einer Spindel oder einer Werkzeugwechselposition gebracht werden. Bei dem bekannten Werkzeugwechsler weisen beide Greifer an den diametral gegenüberliegenden Endes des Gebildes jeweils eine feste Greiferbacke und eine verschwenkbare Greiferbacke auf. Die jeweils verschwenkbare Greiferbacke ist über einen Hebel betätigbar, der an einem raumfesten Anschlag der Spindel verschwenkt wird und damit die bewegliche Greiferbacke öffnet.

Aus dem Dokument DE-A-25 36 671 ist eine Werkzeugmaschine mit einer Spindel und einer Werkzeugwechseleinrichtung bekannt. Auch bei dieser bekannten Werkzeugmaschine ist ein Greifer vorgesehen, der einerseits zwei starre Führungsbacken, andererseits aber zwei in den starren Führungsbacken verschwenkbare Haltebacken aufweist. Die Haltebacken sind federbelastet und über einen gemeinsamen Schieber betätigbar.

Aus dem Dokument DE-A-25 25 212 ist eine Werkzeugaufnahme bekannt, bei der ebenfalls ein Doppelarmgreifer der bereits weiter oben erläuterten Art vorgesehen ist. Auch bei dieser bekannten Anordnung wird mit einem Greifer gearbeitet, der einerseits eine Führung für einen Bund des Werkzeughalters, andererseits aber auch verschwenkbare Haltebacken aufweist. Diese Haltebacken sind jedoch nicht in einer Radialebene des Werkzeughalters sondern vielmehr in einer Richtung parallel zur Werkzeughalterachse verschwenkbar und greifen damit in Achsrichtung in Aussparungen am Umfang des Werkzeughalters.

Aus dem Dokument PATENT ABSTRACTS OF JAPAN, Band 6, Nr. 4 (M-106) (882), vom 12. Januar 1982 sowie aus dem Dokument JP-A-56 126 549 ist noch ein Werkzeughalter für einen automatischen Werkzeugwechsler bekannt. Auch bei dieser bekannten Anordnung wird ein Doppelarmgreifer verwendet, dessen Greifer mit betätigbaren, verschwenkbaren Haltebacken ausgestattet sind.

Der Erfindung liegt demgegenüber die Aufgabe zugrunde, einen Werkzeugwechsler der eingangs genannten Art dahingehend weiterzubilden, daß eine große Betätigungskraft für die Backen mittels eines besonders reibungsarmen Getriebes erreicht wird, so daß die Betätigungskraft gering gehalten werden kann, und auch sichergestellt ist, daß auch bei verhältnismäßig klein dimensionierter Rückstellfeder eine sichere Schließbewegung ohne die Gefahr eines Verklemmens der Getriebeelemente gewährleistet ist.

Diese Aufgabe wird erfindungsgemäß dadurch gelöst, daß die Backen jeweils zwei Nocken aufweisen, und daß der Bolzen mit vier über seinen Umfang verteilten Führungsschrägen versehen ist, die paarweise gegenläufig verlaufen, wobei jeweils eine Führungsschräge eines jeden Paares wechselweise über Kugeln an den Nocken der Backen angreifen.

Die der Erfindung zugrundeliegende Aufgabe wird auf diese Weise vollkommen gelöst. Die Kraftübertragung mittels der Kugeln hat nämlich den wesentlichen Vorteil, daß ein besonders reibungsarmes Getriebe Verwendung findet, so daß die Betätigungskraft gering gehalten werden kann und auch sichergestellt ist, daß auch bei verhältnismäßig klein dimensionierter Rückstellfeder eine sichere Schließbewegung ohne die Gefahr eines Verklemmens der Getriebeelemente gewährleistet ist.

Ein weiterer Vorteil ist, daß die Öffnungs- bzw. Schließbewegung der Backen über insgesamt vier, paarweise gegenläufig arbeitende Kugeln erreicht wird, wobei die Kinematik der Bewegungen in einfacher Weise über die Führungsschrägen eingestellt werden kann und eine Zwangssteuerung der Öffnungs- und Schließbewegung gewährleistet ist.

Bei einem bevorzugten Ausführungsbeispiel der Erfindung ist die Nocke bzw. sind die Nocken axial justierbar.

Dies hat insbesondere bei den die Schließbewegung bewirkenden Nocken den Vorteil, daß exakt eine Schließstellung eingestellt werden kann, in der die Backen das Werkzeug gerade so eng umgreifen, daß es sich noch praktisch reibungslos in den Backen drehen kann, andererseits aber kaum noch eine Möglichkeit der Auswanderung aus einer Sollage besteht.

Schließlich ist noch eine Ausführungsform der Erfindung bevorzugt, bei der die beweglichen Backen auf festen Backen bewegbar sind, wobei die festen Backen eine gerade Führung mit einer einem Umfang des Werkzeuges entsprechenden lichten Weite aufweisen und die beweglichen Backen mit mindestens abschnittsweise mit einer kreisbogenförmigen Halterung für das Werkzeug versehen sind, wobei die Halterung in der Spreizstellung außerhalb der lichten Weite liegt.

Diese Maßnahme hat den Vorteil, daß der Greifer des Werkzeugwechslers zunächst in radialer Richtung das Werkzeug ergreifen kann, während sich die beweglichen Backen noch außerhalb der Bewegungsbahn des Werkzeuges befinden. Erst wenn das Werkzeug am Ende der geraden Führung, beispielsweise in einer halbkreisförmigen Aufnahme der festen Backen angekommen ist, schließen sich die beweglichen Backen, wodurch das Werkzeug über seinen gesamten Umfang oder zumindest einen sehr großen Teil seines Umfanges formschlüssig gehalten ist.

Weitere Vorteile ergeben sich aus der Beschreibung und der beigefügten Zeichnung.

Ein Ausführungsbeispiel der Erfindung ist in der Zeichnung dargestellt und wird in der nachfolgenden Beschreibung näher erläutert. Es zeigen:

Fig. 1    eine Draufsicht auf einen Greifer eines erfindungsgemäßen Werkzeugwechslers, in Schließstellung;

Fig. 2    eine Darstellung, ähnlich Fig. 1, jedoch in Spreizstellung;

Fig. 3    eine teilweise geschnittene Darstellung in der Ansicht der Fig. 1, und zwar in der Ebene III-III von Fig. 4;

Fig. 4    eine Seitenansicht, im Schnitt und zwar entlang der Linie IV-IV von Fig. 3 der in Fig. 3 gezeigten Hand, teilweise abgebrochen.

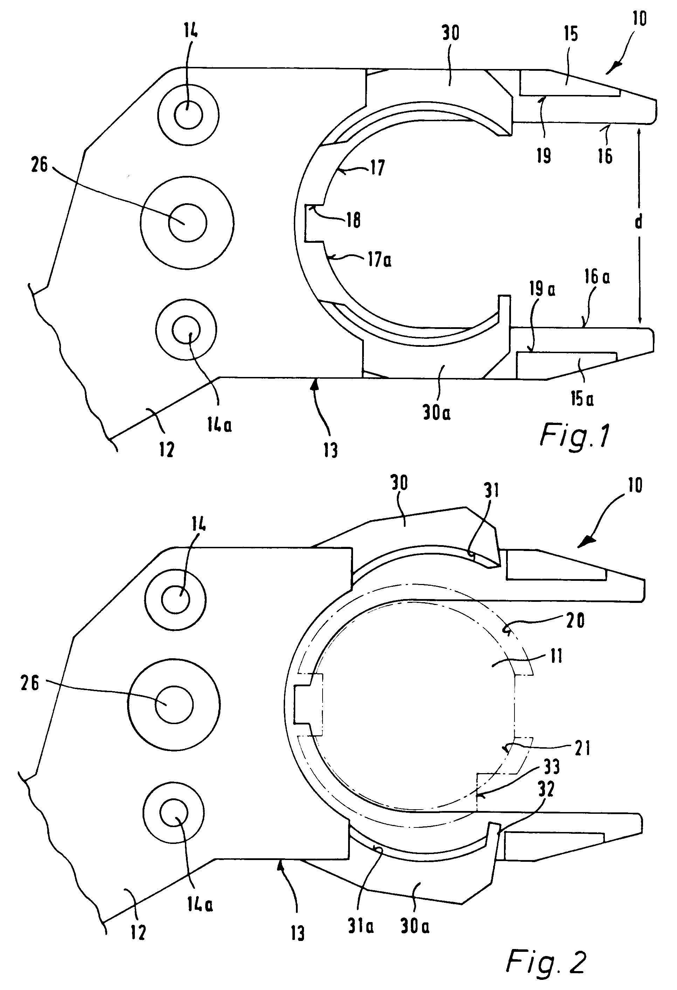

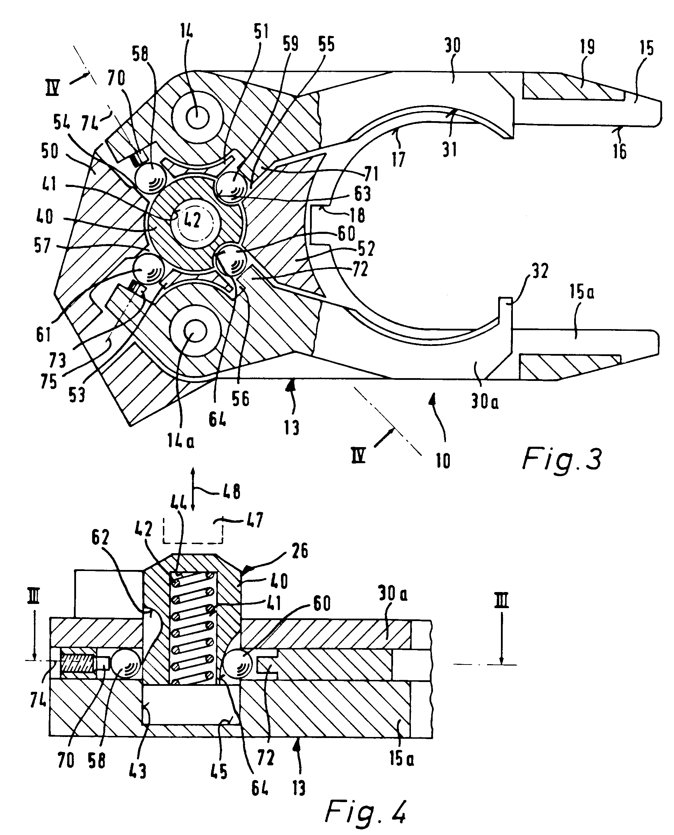

In den Fig. 1 und 2 bezeichnet 10 insgesamt einen Werkzeugwechsler, der zum Ergreifen und Halten eines in Fig. 2 schematisch angedeuteten Werkzeuges 11 vorgesehen ist. Ein Arm 12 des Werkzeugwechslers 10 ist in den Fig. 1 und 2 nur abgebrochen dargestellt, er verläuft im allgemeinen aus der Zeichenebene der Fig. 1 und 2 zunächst schräg und dann senkrecht heraus, während ein Greifer 13 des Werkzeugwechslers 10 sich üblicherweise in einer Horizontalebene erstreckt. Mit 14, 14a sind Zentriermittel bezeichnet, die ggf. oben angeschrägte Bohrungen aufweisen, welche ihrerseits mit zugehörigen Zentrierzapfen an der Spindel oder am Magazin der Werkzeugmaschine zusammenarbeiten. 14, 14a repräsentieren jedoch auch Verschwenkachsen, wie dies weiter unten zu Fig. 3 noch erläutert werden wird.

Mit 15, 15a sind zwei feste Backen der Greifer 13 bezeichnet. Die Backen 15 sind nach vorne offen und weisen gerade, zueinander parallele Führungen 16, 16a auf, die zwischen sich eine lichte Weite d frei lassen. Zum Arm 12 hin gehen die geraden Führungen 16, 16a in eine halbkreisförmige Aufnahme 17 mit einer Zentriernut 18 über. Am vorderen freien Ende der festen Backen 15, 15a sind Begrenzungsstege 19, 19a vorgesehen, um das Werkzeug auch seitlich zu führen.

Die lichte Weite d bzw. der Abstand der Begrenzungsstege 19, 19a sind so dimensioniert, daß das Werkzeug 11 mit Außendurchmessern 20 bzw. 21 formschlüssig zwischen den festen Backen 15, 15a axial geführt wird. Das Werkzeug 11 ist hierzu mit einem axialen Profil versehen, wie dies an sich bekannt ist und im Rahmen der vorliegenden Erfindung nicht nochmals erläutert zu werden braucht.

Zwischen den Zentriermitteln bzw. Achsen 14, 14a befindet sich ein Betätigungsknopf 26, dessen Funktion weiter unten zu den Fig. 3 und 4 noch näher erläutert wird. Der Betätigungsknopf 26 ist in einer Richtung senkrecht zur Zeichenebene der Fig. 1 und 2 bewegbar. Wird der Betätigungsknopf 26 in dieser Weise bewegt, verschwenken bewegliche Backen 30, 30a um die Achsen 14, 14a aus der in Fig. 1 gezeichneten Schließstellung in die in Fig. 2 gezeichnete Spreizstellung. Die beweglichen Backen 30, 30a sind mit kreisbogenförmigen Halterungen 31, 31a versehen, die ebenfalls an die an sich bekannte Außenkontur des Werkzeuges 11 angepaßt sind. Zur Fixierung einer bestimmten Umfangsstellung des Werkzeuges 11 ist ein freies Ende der beweglichen Backe 30a mit einem Vorsprung 32 versehen, der in eine zugehörige eckenförmige Aussparung 33 des Werkzeuges 11 greift.

Aus dem Vorstehenden ergibt sich deutlich, daß in der in Fig. 2 gezeigten Spreizstellung das Werkzeug 11 von rechts in den Greifer 13 eingeführt werden kann, bis es an der halbkreisförmigen Aufnahme 17 des Greifers 13 zur Anlage kommt. Werden dann die beweglichen Backen 30, 30a in die in Fig. 1 dargestellte Schließstellung gebracht, so ist das Werkzeug 11 sowohl in der Zeichenebene der Fig. 1 und 2 wie auch gegen eine Drehung um seine Hochachse gesichert.

Das Werkzeug 11 kann in dieser Lage auch mit hohen Bewegungsgeschwindigkeiten in eine Spindel der Werkzeugmaschine überführt werden, ohne daß irgend eine ungewünschte Lageveränderung des Werkzeuges 11 befürchtet werden muß. Das Werkzeug 11 wird der Spindel der Werkzeugmaschine vielmehr auch in einer definierten Umfangsposition angeboten, so daß ein in der Spindel befindlicher Nutenstein unmittelbar in eine zugehörige Nut des Werkzeuges 11 eingreifen kann.

Die Funktionsweise des Betätigungsknopfes 26 in Zusammenwirkung mit den beweglichen Backen 30, 30a soll nun anhand der Fig. 3 und 4 erläutert werden.

Man erkennt, daß der Betätigungsknopf 26 als Bolzen 40 ausgebildet ist, der über eine axiale erste Sackbohrung 41 verfügt, in der eine Schraubenfeder 42 angeordnet ist. In dem Greifer 13 ist eine konzentrische, entgegengesetzte zweite Sackbohrung 43 vorgesehen, in der der Bolzen 40 axial läuft. Die Schraubenfeder 42 stützt sich mit ihrem einen Ende an einem ersten Boden 44 des Bolzens 40 und mit ihrem anderen Ende an einem zweiten Boden 45 der zweiten Sackbohrung 43 ab.

Oberhalb des Bolzens 40 ist in Fig. 4 mit 47 ein raumfester Anschlag angedeutet, und es ist leicht einsehbar, daß bei einer Bewegung des Greifers 13 in Richtung des Doppelpfeiles 48 der Bolzen 40 in Anlage an den raumfesten Anschlag 47 kommt und nach unten gegen die Kraft der Schraubenfeder 42 in die zweite Sackbohrung 43 hineingedrückt wird.

Aus Fig. 3 ist deutlich zu erkennen, daß die zweite Sackbohrung 43 den Bolzen 40 nicht über den gesamten Umfang führt. Die zweite Sackbohrung 43 wird vielmehr durch vier Umfangsteile 50, 51, 52, 53 des Greifers 13 gebildet, die jeweils über einen gewissen Umfangsabschnitt voneinander beabstandet sind. Hierdurch befinden sich zwischen den Umfangsteilen 50, 51, 52, 53 radial verlaufende Kanäle 54, 55, 56, 57, die am Außenumfang des Bolzens 40 enden. In den radialen Kanälen 54, 55, 56, 57 laufen Kugeln 58, 59, 60, 61.

Wie man deutlich aus Fig. 4 und teilweise auch aus Fig. 3 erkennen kann, ist der Bolzen 40 an seinem Außenumfang im Bereich der Kanäle 54, 55, 56, 57 mit Führungsschrägen bzw. -nuten versehen, von denen drei, nämlich Führungsschrägen 62, 63, 64 in Fig. 3 und 4 zu erkennen sind, während die der vierten Kugel 61 zugeordnete Führungsschräge nicht im einzelnen erkennbar ist.

Die Anordnung der Führungsschrägen 62, 63, 64 ist so getroffen, daß in den beiden axialen Endstellungen des Bolzens 40 jeweils zwei Kugeln in die Führungsschrägen eintreten und zwei Kugeln austreten, so daß sie am Außenumfang des Bolzens 40 anliegen. Diese Radialbewegung der Kugeln 58, 59, 60, 61 bei axialem Verschieben des Bolzens 40 wird ausgenutzt, um die beweglichen Backen 30, 30a zwischen den in den Fig. 1 und 2 erkennbaren Endstellungen hin- und herzubewegen.

Hierzu sind die beweglichen Backen 30, 30a, wie man deutlich aus Fig. 3 erkennt, die um die Achsen 14, 14a drehbar sind, mit Nocken 70, 71, 72, 73 versehen, wobei die Nocken 70 und 73, bei deren axialer Beaufschlagung die beweglichen Backen 30, 30a in die Schließstellung verschwenkt werden, axial justierbar sind. Dies ist in Fig. 3 mit Achsen 74, 75 angedeutet, und Fig. 4 zeigt, daß die Nocken 70 und 73 z.B. als Madenschrauben ausgebildet sein können.

Bei der in Fig. 3 gezeigten Schließstellung befindet sich der Bolzen 40 in seiner oberen Endstellung und die Schraubenfeder 42 ist entspannt. In dieser Stellung sind die Kugeln 59 und 60 in die zugehörigen Führungsschrägen 63, 64 eingetreten, so daß die Öffnungsnocken 71, 72 nicht beaufschlagt sind. Hingegen sind die Kugeln 58, 61 infolge der gegenläufigen Gestaltung der zugehörigen Führungsschrägen 62 sowie der weiteren, nicht erkennbaren Führungsschräge der Kugel 61 aus diesen Führungsschrägen ausgetreten und liegen am Außenumfang des Bolzens 40 an. Infolge dieses radialen Auswanderns der Kugeln 58, 61 sind die Schließnocken 70, 73 betätigt und die beweglichen Backen 30, 30a befinden sich in der in den Fig. 1 und 3 erkennbaren Schließstellung.

Wird nun der Greifer 13 in Richtung des in Fig. 4 eingezeichneten Doppelpfeiles 48 nach oben gegen den raumfesten Anschlag 47 bewegt, wird der Bolzen 40 gegen die Kraft der Schraubenfeder 42 nach unten in die zweite Sackbohrung 43 bis zum Anschlag eingeschoben. Die Kugeln 59 und 60 laufen nun an ihren Führungsschrägen 63, 64 schräg nach oben und radial nach außen, so daß die Öffnungsnocken 71, 72 betätigt und die beweglichen Backen 30, 30a in die in Fig. 2 eingezeichnete Spreizstellung geöffnet werden. Gleichzeitig können die Kugeln 58, 61 in die gegenläufige Führungsschräge 62 sowie in die nicht eingezeichnete Führungsschräge der Kugel 61 eintreten, so daß die Schließnocken 70, 73 entlastet werden.

Aus dem Vorstehenden ergibt sich deutlich, daß eine zwangsgesteuerte Öffnungs- und Schließbewegung auf diese Weise erzielt wird, so daß in beiden Bewegungsphasen eine kontrollierte Bewegung der beweglichen Backen 30, 30a gewährleistet ist.

## Patentansprüche

1. Werkzeugwechsler für Werkzeuge (11) einer Werkzeugmaschine mit einem Greifer (13), an dem zwei bewegliche Backen (30, 30a) zum formschlüssigen Ergreifen der Werkzeuge (11) angeordnet sind, wobei der Greifer (13) einen mittels eines raumfesten Anschlages (47) der Werkzeugmaschine axial verschiebbaren, gegen die Kraft einer Feder (42) arbeitenden Bolzen (40) aufweist, der die Backen (30, 30a) um eine Achse (14, 14a) in eine Spreizstellung zum Einführen des Werkzeuges (11) bzw. in eine Schließstellung zum formschlüssigen Ergreifen des Werkzeuges (11) verschwenkt, wobei ferner die Backen (30, 30a) mit mindestens einer Nocke (70 bis 73) zum Verschwenken versehen sind und der Bolzen (40) mittels mindestens einer zur Bolzenachse geneigt verlaufenden axialen Führungsschräge (62 bis 64) in zwei unterschiedlichen axialen Stellungen mit unterschiedlicher radialer Ausladung an der Nocke (70 bis 73) anliegt, dadurch gekennzeichnet, daß die Backen (30, 30a) jeweils zwei Nocken (70/71, 72/73) aufweisen, und daß der Bolzen (40) mit vier über seinen Umfang verteilten Führungsschrägen (62 bis 64) versehen ist, die paarweise gegenläufig verlaufen, wobei jeweils eine Führungsschräge (62/63, 64) eines jeden Paares (62, 63/64) wechselweise über Kugeln (58 bis 61) an den Nocken (70/71, 72/73) der Backen (30, 30a) angreifen.

2. Werkzeugwechsler nach Anspruch 1, dadurch gekennzeichnet, daß die beweglichen Backen (30, 30a) in der entspannten Stellung der Feder (42) die Schließstellung einnehmen.

3. Werkzeugwechsel nach einem der Ansprüche 1 oder 2, dadurch gekennzeichnet, daß eine Nocke (70 bis 73) axial justierbar ist.

4. Werkzeugwechsler nach einem der Ansprüche 1 bis 3, dadurch gekennzeichnet, daß die beweglichen Backen (30, 30a) jeweils auf einer festen Backe (15, 15a) bewegbar sind, wobei die festen Backen (15, 15a) eine gerade Führung (16, 16a) mit einer einem Umfang des Werkzeuges (11) entsprechenden lichten Weite (d) aufweisen und die beweglichen Backen (30, 30a) mindestens abschnittsweise mit einer kreisbogenförmigen Halterung (31, 31a) für das Werkzeug (11) versehen sind, wobei die Halterung (31, 31a) in der Spreizstellung außerhalb der lichten Weite (d) liegt.

## Claims

1. A tool exchanger for tools (11) of a machine tool having a gripper (13) with two moveable jaws (30, 30a) attached thereto for a form-locking gripping of the tools (11), the gripper (13) having a pin (40) being axially displaceable against the action of a spring (42) by means of a stationary stop (47), the pin (40) swivelling the jaws (30, 30a) about an axis (14, 14a) into a spread position for introducing the tool (11) and into a closed position, resp., for a form-locking gripping of the tool (11), the jaws (30, 30a) being, further, provided with at least one cam (70-73) for swivelling, the pin (40) adjoing the cam (70-73) in two distinct axial positions with distinct radial extension by means of at least one axial guide slope (62-64) being inclined to the pin axis, characterized in that the jaws (30, 30a) have two cams (70/71, 72/73 each), and that the pin (40) has four guide slopes (62-64) distributed around its periphery and being oppositely oriented in pairs, one guide slope (62/63, 64 each) of each pair (62, 63/64) engaging alternately the cams (70/71, 72/73) of the jaws (30, 30a) via balls (58-61).

2. The tool exchanger of claim 1, characterized in that the moveable jaws (30, 30a) are in the closed position when the spring (42) is in its relaxed position.

3. The tool exchanger of claim 1 or 2, characterized in that one cam (70-73) may be axially adjusted.

4. The tool exchanger of any of claims 1 through 3, characterized in that the moveable jaws (30, 30a) are each moveable on a fixed jaw (15, 15a), the fixed jaws (15, 15a) having a straight guide (16, 16a) with a clearance (d) therebetween corresponding to a periphery of the tool (11), the moveable jaws (30, 30a) being provided, at least over a portion thereof, with an arc-shaped support (31, 31a) for the tool (11), the support (31, 31a) being arranged outside the clearance (d) in the spread position.

## Revendications

1. Changeur d'outils pour outils (11) d'une machine-outil pourvu d'un préhenseur (13) sur lequel sont disposées deux mâchoires mobiles (30, 30a) pour saisir les outils (11) en engagement positif , le préhenseur (13) présentant un doigt (40) travaillant contre l'action d'un ressort (42), déplaçable axialement au moyen d'une butée fixe dans l'espace (47) de la machine-outil, qui fait pivoter les mâchoires (30, 30a) autour d'un axe (14, 14a), dans une position écartée pour introduire l'outil (11) et dans une position fermée pour saisir l'outil (11) en engagement positif, les mâchoires (30, 30a) étant de plus équipées d'au moins une came (70 à 73) pour leur déplacement, et le doigt (40) s'appuyant, au moyen d'au moins un guidage oblique (62 à 64) axial s'étendant de façon inclinée vers l'axe du doigt, contre la came (70 à 73), dans deux positions axiales différentes avec une distance de l'axe différente, caractérisé en ce que les mâchoires (30, 30a) présentent respectivement deux cames (70/71, 72/73), et en ce que le doigt (40) est équipé de quatre guidages obliques répartis sur sa circonférence (62 à 64) qui s'étendent dans des directions opposées, par paires, respectivement un guidage oblique (62/63, 64) de chaque paire (62, 63/64) reposant tour à tour, par l'intermédiaire de billes (58 à 61), sur les cames (70/71, 72/73) des mâchoires (30, 30a).

2. Changeur d'outils selon la revendication 1, caractérisé en ce que les mâchoires mobiles (30, 30a) prennent la position fermée en position détendue du ressort (42).

3. Changeur d'outils selon l'une quelconque des revendications 1 ou 2, caractérisé en ce qu'une came (70 à 73) peut être ajustée axialement.

4. Changeur d'outils selon l'une quelconque des revendications 1 à 3, caractérisé en ce que les mâchoires mobiles (30, 30a) sont mobiles respectivement sur une mâchoire fixe (15, 15a), les mâchoires fixes (15, 15a) présentant un guidage droit (16, 16a) avec un espace libre (d) correspondant à une circonférence de l'outil (11), et les mâchoires mobiles (30, 30a) étant équipées au moins sur certaines portions, d'une bride de support en forme d'arc de cercle (31, 31a) pour l'outil (11), la bride de support (31, 31a) reposant, en position écartée, en-dehors de l'espace libre (d).

*Fig.1*

*Fig.2*

Fig.3

Fig. 4